# EUROPÄISCHE PATENTANMELDUNG

(11) **EP 2 329 898 A1**
(43) Veröffentlichungstag der Anmeldung: **08.06.2011**
(21) Anmeldenummer: 09014874.3
(22) Anmeldetag: 01.12.2009
(51) Int. Cl.: B21J 15/10, B21J 15/14, B21J 15/32, B25B 27/00

(54) **Automatische Vorrichtung zum Setzen von Nieten**

(71) Anmelder: Stöger, Lorenz, 82538 Geretsried (DE)
(72) Erfinder: Stöger, Lorenz, 82538 Geretsried (DE)
(74) Vertreter: Flosdorff, Jürgen

(57) **Zusammenfassung**

Die Vorrichtung zum Setzen von Nieten ist gekennzeichnet durch einen Roboter (7) mit einem Roboterarm (8), an dem ein Setzgerät (9) gehalten ist, das eine Versorgungseinheit (12), die mit einem Vorrat an Nieten verbunden ist, eine Zuführeinheit (10) für jeweils einen ausgewählten Niet und eine Setzeinheit (11) für den jeweiligen Niet aufweist. Die Vorrichtung führt einen automatischen Montageprozess mit hoher Leistungsfähigkeit und Präzision durch und setzt vollautomatisch die Nieten.

## Beschreibung

Die Erfindung betrifft eine Vorrichtung zum automatischen Setzen von Nieten. Dabei geht es insbesondere - jedoch nicht ausschließlich - um solche Nieten, die eine äußere Hülse mit einem verbreiterten Hülsenkopf, der mit mehreren über den Umfang gleichmäßig verteilten Vertiefungen zum Eingriff eines Haltewerkzeugs versehen ist, sowie ein Schraubenbolzen-ähnliches Innenelement aufweisen, das mit einem abgeflachten Ansatz aus dem Hülsenkopf herausragt und an dem gegenüberliegenden Endbereich mit der Hülse in einem Gewindeeingriff steht. Durch Drehen des Innenelementes in der Hülse wird ein ringförmiger Zwischenabschnitt der Hülse nach außen gedrückt und an das Bauteil angepresst, an dem der Niet befestigt werden soll, während die äußere Hülse gegen Drehung arretiert ist, wobei schließlich der Ansatz abgerissen wird.

Mit derartigen Nieten werden beispielsweise Abschnitte eines Flugzeugrumpfes miteinander verbunden, und Versteifungselemente für die Innenhaut befestigt. Die Nieten der betrachteten Art werden dabei bisher mit Handgeräten gesetzt und angezogen, was angesichts der großen Anzahl von Nieten insbesondere beim Flugzeugbau ein langwieriger, kostenintensiver Arbeitsprozess ist.

Der vorliegenden Erfindung liegt die Aufgabe zugrunde, eine Vorrichtung zum Setzen von Nieten anzugeben, die mit hoher Leistungsfähigkeit und Präzision einen automatischen Montageprozess durchführt und vollautomatisch die Nieten setzt.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die erfindungsgemäße Vorrichtung enthält vorzugsweise einen Roboter mit einem Roboterarm, oder eine ähnliche Postioniereinheit, an dem bzw. der ein Setzgerät gehalten ist, das eine Versorgungseinheit mit einem Vorrat an Nieten verschiedener Art, vorzugsweise unterschiedlicher Länge, eine Zufuhreinheit für jeweils einen ausgewählten Niet und eine Setzeinheit für den jeweiligen Niet aufweist. Die Versorgungseinheit ist dauerhaft fest an dem Roboter angebracht, d.h. sie wird während des Einsatzes der erfindungsgemäßen Vorrichtung nicht gewechselt.

Die Zuführeinheit und die Setzeinheit sind bevorzugt zu einer gemeinsamen Baugruppe miteinander verbunden, die schnell wechselbar an dem Roboter gehalten ist. D.h., beim Betrieb der erfindungsgemäßen Vorrichtung wählt der Roboter aus einer Anzahl von bereitgestellten Baugruppen die jeweils gewünschte Baugruppe aus und stellt die funktionsfähige Verbindung mit dieser mittels einer üblichen Schnellwechseleinheit her.

Die Versorgungseinheit steht mit mehreren, beispielsweise sechs Nietmagazinen, bzw. Nietvorräte mit zugehörigen Zuführschläuchen in Verbindung, die zu einem gemeinsamen Anschluss für einen einzigen Zuführschlauch der Zuführeinrichtung führen, sowie eine Druckluftquelle, die den jeweils ausgewählten Niet aus dem Vorratsbehälter mit Druckluft in den Zuführschlauch der Zuführeinrichtung bläst. Die Zuführschläuche sind jeweils mit einem Sensor versehen, der den Durchgang eines Niets erfasst.

Weiter wird vorgeschlagen, dass die Zuführeinrichtung einen Sensor aufweist, der den zugeführten Niet daraufhin überprüft, ob er nach dem unten beschriebenen Bremsvorgang in die Greiferbacken aufgenommen ist. Hierzu ist vorzugsweise in einer bestimmten Entfernung vor dem Ende des Zuführschlauchs ein Ringsensor vorgesehen, der zweckmäßigerweise an dem Zuführschlauch befestigt ist. Wenn festgestellt wird, dass ein falscher Niet zugeführt wird, wird ein Fehlersignal abgegeben, das einen Mechanismus betätigt, der den falschen Niet zu einer Abfallbox des Setzgerätes transportiert, wie weiter unten noch näher beschrieben wird.

Am Ende des Zuführschlauchs befindet sich vorteilhafterweise eine Bremseinrichtung, die den Austritt der den Niet befördernden Druckluft auf ein Signal hin versperrt, das zweckmäßigerweise ebenfalls von dem Ringsensor abgegeben wird. Die Bremseinrichtung kann aus einer Bremsplatte bestehen, die von einem Bremsschlitten vorgerückt wird, um die Austrittsöffnung der Druckluft an dem Zuführschlauch zu versperren. Dies hat zur Folge, dass sich die vor dem Niet befindliche Luft zu einem Luftkissen verdichtet, die den Niet so stark bremst, dass er keine Beschädigung erfährt. Bei größeren Nieten kann zusätzlich in den Endabschnitt des Zuführschlauchs Druckluft eingeblasen werden. Bei dieser Bremseinrichtung handelt es sich um ein sehr vorteilhaftes Merkmal der vorliegenden Erfindung.

Nach einem weiteren Vorschlag der Erfindung befinden sich unter der Bremseinrichtung, d.h. in Zufuhrrichtung des Nietes betrachtet hinter der Bremseinrichtung Greiferbacken und Rückführgreiferbacken für einen Niet, die mit einem Verfahrschlitten verbunden sind. Die Greiferbacken werden unter dem Ende des Zuführschlauchs positioniert und nehmen den ankommenden Niet auf und transportieren ihn zu der Setzeinheit, die den Niet ergreift. Die Greiferbacken werden verschoben und der Niet wird mit Dichtmittel benetzt. Wenn ein Fehlersignal abgegeben wird, werden die Rückführgreiferbacken zu dem Niet gebracht und positionieren den Niet so, dass er mit Druckluft durch einen zugehörigen Schlauch in die Abfallbox zurück geblasen wird. Der Greifer ist in die Grundstellung zurück gefahren, so dass ein neuer Niet zugeführt werden kann. Der Greifer ist somit nicht mit Dichtmittel in Berührung gekommen.

Die Setzeinheit, deren Ausbildung als unabhängige Erfindung beansprucht wird, enthält einen Umkehrmotor mit Drehmomentsensor, ein Nietbefestigungselement, das über einen in einer ersten Richtung offenen, in der zweiten Richtung gesperrten Freilauf mit dem Motor in Antriebsverbindung steht, ein Niethalteelement zum verdrehsicheren Halten des Niets, das über einen in der ersten Richtung gesperrten, in der zweiten Richtung offenen Freilauf mit dem Motor in Verbindung steht, wobei die beiden Elemente gegen Federkraft in die Setzeinheit zurückschiebbar sind, und einen durch das Nietbefestigungselement verlaufenden, mit einer Vakuumquelle verbundenen Luftkanal, der in einen vorderen Aufnahmespalt des Nietbefestigungselementes einmündet. Dieser Aufnahmespalt dient zur Aufnahme des Ansatzes des inneren schraubenbolzenförmigen Elementes des Niets, das zur Befestigung des Niets an dem zugehörigen Bauteil gedreht und fest angezogen wird, bis der Ansatz abreißt. Das Niethalteelement ist an seiner vorderen Stirnseite mit Nasen versehen, die in die Vertiefungen des Hülsenkopfs des Niets eingreifen müssen, um die Hülse verdrehsicher zu halten.

Die automatische Setzeinheit arbeitet dabei auf folgende Weise: Die Setzeinheit wird mittels eines Verfahrschlittens zu dem zwischen den Greiferbacken gehaltenen Niet gefahren und an diesen angedrückt, wobei das Nietbefestigungselement durch den Ansatz des Niets und das Niethalteelement durch den Hülsenkopf gegen die Kraft ihrer Federn in der Setzeinheit zurück geschoben werden. Anschließend dreht der Motor der Setzeinheit rechts (bzw. in der zweiten Richtung) und nimmt über die "rechts gesperrten" (Freiläufe) das Nietbefestigungselement mit. Sowie der vordere Aufnahmespalt des Nietbefestigungselementes mit der Lage des Ansatzes des Niets übereinstimmt, federt das Nietbefestigungselement (unter der Aufnahme des Ansatzes) aus. Hierdurch steigt das Drehmoment des Motors, das gemessen wird. Wenn das Drehmoment eine vorbestimmte Größe erreicht hat, schaltet der Antrieb um, so dass der Motor nun links dreht. Wenn die Nasen der vorderen Stirnseite des Niethalteelementes mit der Position der Vertiefungen an dem Hülsenkopf übereinstimmen, federt das Niethalteelement aus, woraufhin das Drehmoment steigt. Damit ist sicher gestellt, dass der Niet richtig ergriffen ist und beide Eingriffsmerkmale eingegriffen haben. Der Motor bleibt nun stehen. Zum Halten des Niets wird das Vakuum eingeschaltet.

Anschließend wird die Setzeinheit von dem Roboter vor den Setzort gebracht, woraufhin der Niet von einer linearen Vorschubeinheit auf überwachte Weise in die Bohrung geschoben wird. Der Motor dreht nun rechts, bis das Abrissteil des Niets abgedreht ist. Hierbei dient das rechts gesperrte Niethalteelement mit seinen Nasen als Verdrehsicherung.

Die Drehmomentkurve wird aufgezeichnet, deren Auswertung Rückschlüsse auf die Qualität der Verbindung zulässt. Damit ist der Setzvorgang abgeschlossen, und der Abriss wird über einen Krümmer für die Rückführung und einen Rückführschlitten für den Krümmer zu einem Schlauch transportiert, der den Abriss in die Abfallbox bläst.

Die erfindungsgemäße Vorrichtung ermöglicht das Setzen der Nieten in einem kontinuierlichen Prozess, der Stillstandzeiten infolge eines irrtümlich zugeführten falschen Niets und eine Beschädigung von Nieten bei der Zuführung sicher vermeidet. Die automatische Vorrichtung ist flexibel und arbeitet mit hoher Präzision und Effektivität.

Weitere Merkmale und Einzelheiten der Erfindung ergeben sich aus der nachfolgenden Beschreibung sowie anhand der Zeichnungen. Dabei zeigen:
- Figuren 1 a bis 1f: einen Niet in Seitenansichten, in Längsschnitten, in einer Stirnansicht und in einer perspektivischen Darstellung;
- Figur 2: eine perspektivische Darstellung eines Roboters mit der erfindungsgemäßen Vorrichtung;
- Figur 3: eine perspektivische Ansicht einer Zuführeinheit;
- Figur 4: eine perspektivische Ansicht einer Versorgungseinheit;

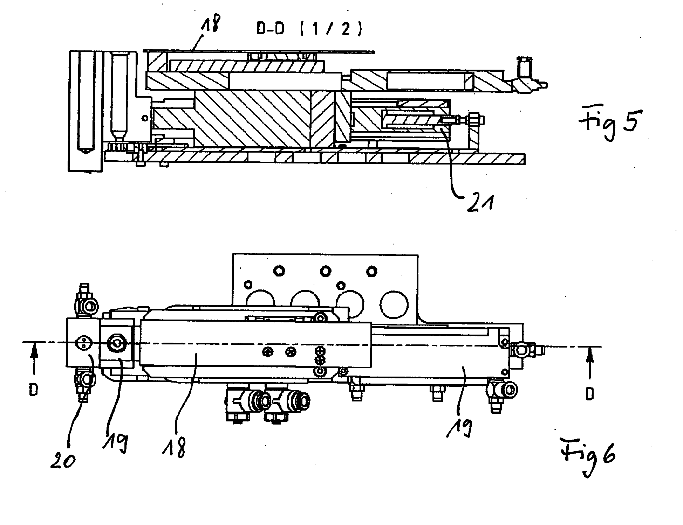

- Figuren 5 und 6: einen Längsschnitt durch einen unteren Teil des Zuführeinheit und eine Aufsicht auf diesen Teil;
- Figur 7: einen Längsschnitt durch eine Setzeinheit für den in Figur 1 dargestellten Niet und
- Figur 8: eine rein schematische Darstellung der Setzvorrichtung.

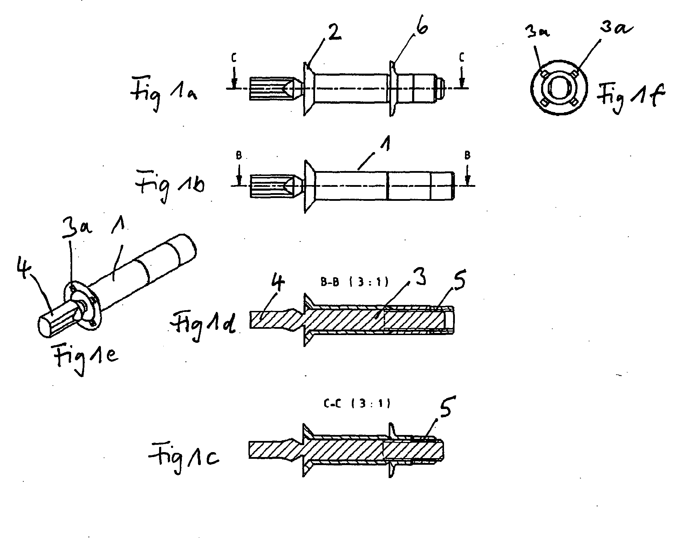

In den Figuren 1a bis 1e ist ein Niet dargestellt, der als "Hand OSI-Bolt" bezeichnet wird und bisher von Hand gesetzt wird. Der Niet enthält eine Außenhülse 1 mit einem verbreiterten Hülsenkopf 2, der in seiner Stirnfläche über den Umfang gleichmäßig verteilte Vertiefungen 3a hat. In der Hülse 1 sitzt ein Schraubenbolzen-ähnliches Element 3 mit einem aus der Hülse 1 herausragenden flachen Ansatz bzw. Abrissteil 4. Das Schraubbolzen-artige Element 3 steht an seinem Endbereich im Gewindeeingriff 5 mit der Hülse 1.

Die Hülse 1 ist zweigeteilt, so dass sich beim Drehen des inneren Elementes 3 ein ringförmiger radialer Flansch 6 ausbildet, der fest an ein Bauteil angepresst wird, an dem der Niet befestigt wird. Beim fortgesetzten Drehen des inneren Elementes 3 reißt der Ansatz 4 ab.

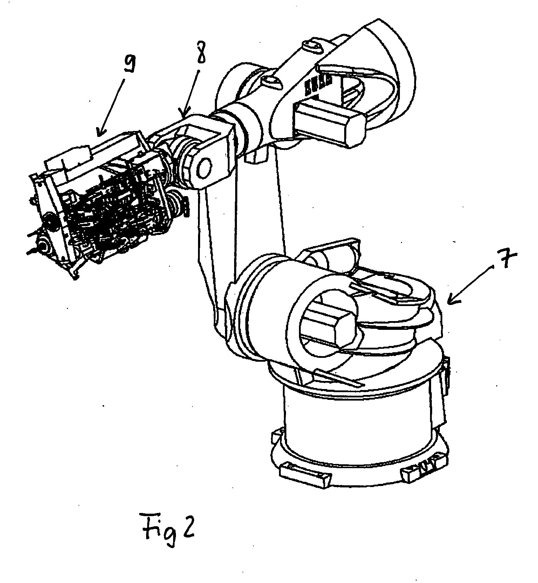

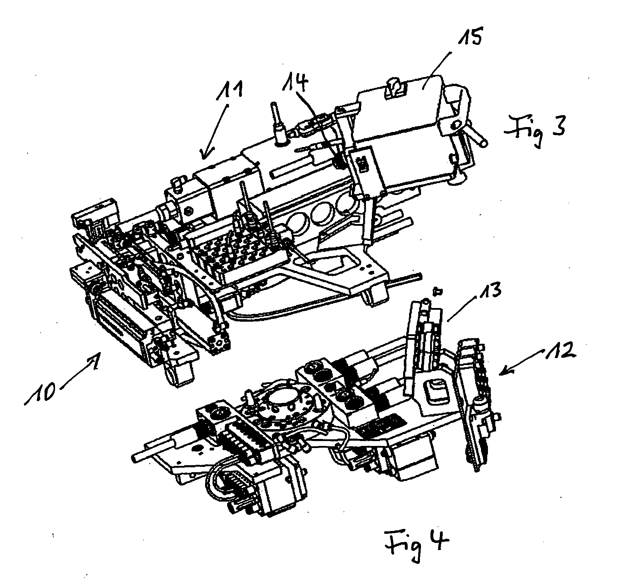

Figur 2 zeigt einen Roboter 7, an dessen Arm 8 die erfindungsgemäße Setzvorrichtung 9 befestigt ist, die so positionierbar ist, dass die Nieten in die vorbereiteten Bohrungen eingesetzt werden können. Die Vorrichtung 9 enthält eine Zuführeinheit 10, die mit einer Setzeinheit 11 zu einer Baugruppe zusammengefasst ist, und eine Versorgungseinheit 12 mit einem Vorrat verschiedener Nieten, wie Figur 4 zeigt.

Die Versorgungseinheit 12 enthält in der dargestellten Ausführungsform sechs Zufuhrschläuche 13 für verschiedene Niete, die in einen einzigen Zuführschlauch 14 der Zuführeinrichtung 10 einmünden. Die Versorgungseinheit 12 ist roboterseitig fest, während die Zuführeinheit 10 mit der Setzeinheit 11 werkzeugseitig schnell wechselbar ist. Die Zuführeinheit 10 enthält einen Abfallbehälter 15, in den falsche oder fehlerhafte Niete und die Abreißteile 4 der gesetzten Niete geblasen werden.

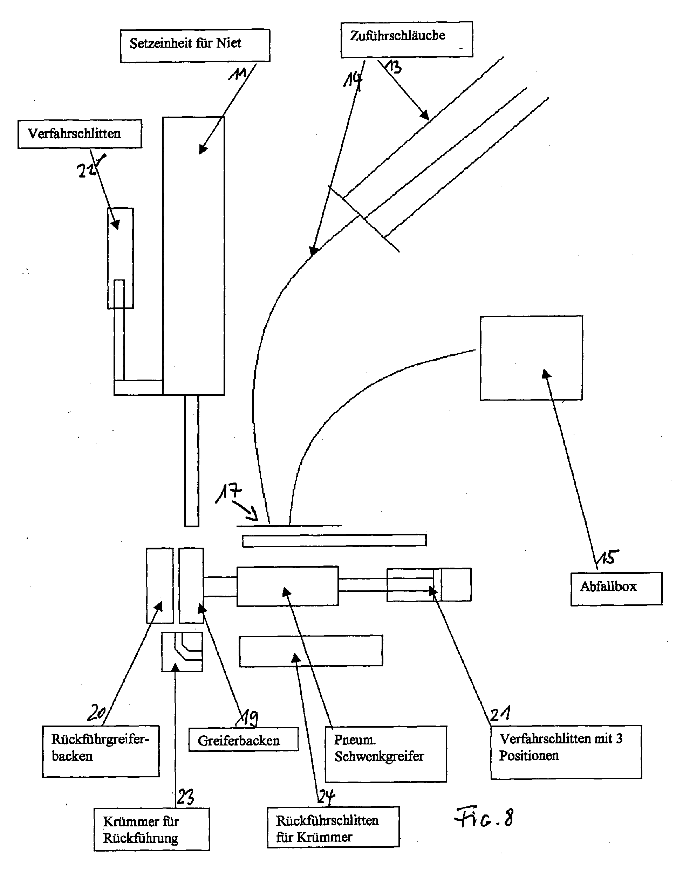

Figur 8 zeigt in einer rein schematischen Darstellung die Zuführschläuche 1 3 der Versorgungseinheit 12, sowie den einzigen Zuführschlauch 14 der Zuführeinheit 10. Am Ende des Zuführschlauchs 14 befindet sich eine Bremseinrichtung 17, die eine Bremsplatte 18 aufweist, die von einem Bremszylinder 19 bewegbar ist, um die Austrittsöffnung des Zuführschlauchs 14 entweder zu verschließen, um ein Luftkissen zu bilden, das den ankommenden Niet abbremst, oder um die Austrittsöffnung frei zu geben. Nahe der Bremsplatte 18 befinden sich Greiferbacken 19 und Rückführgreiferbacken 20, die von einem Greiferzylinder 21 so bewegbar sind, dass - im Falle eines zugeführten falschen Niets - entweder die Rückführgreiferbacken 20 oder die Greiferbacken 19 so positioniert sind, dass sie den Niet nach Zurückziehen der Bremsplatte 18 aufnehmen können. Die Greiferbacken 19 positionieren den Niet so, dass er von der Setzeinheit 11 aufgenommen werden kann, wenn die Setzeinheit 11 von einem zugehörigen Verfahrschlitten 22 entsprechend vorgeschoben worden ist. Ein Krümmer 23 und ein Rückführschlitten 24 für den Krümmer sind vorgesehen, um die Abrissteile 4 der Niete in die Abfallbox 15 zu blasen.

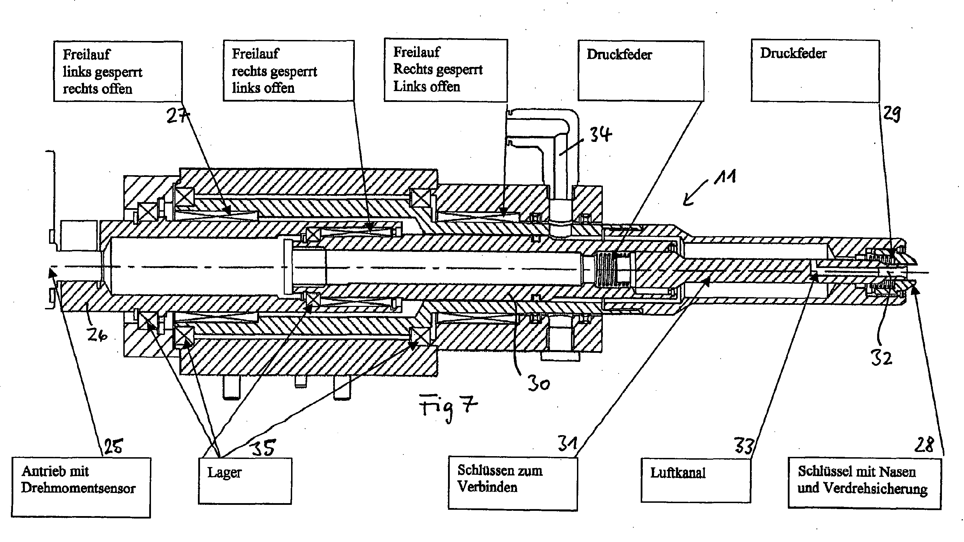

Die in Figur 7 dargestellte Setzeinheit 11 ist zum Setzen von solchen Nieten geeignet, die in den Figuren 1a bis 1e dargestellt sind. Es wird betont, dass die Anordnung aus Roboter 7, Versorgungseinheit 12 und Zuführeinheit 10 auch für andersartige Niete geeignet ist.

Die Setzeinheit 11 enthält einen Umkehrmotor 25, der mit einem Drehmomentsensor verbunden ist. Der Motor 25 dreht eine Motorwelle 26, die über einen links gesperrten und recht offenen Freilauf 27 in Antriebsverbindung mit einem Niethalteelement 28 steht, das an seiner vorderen Stirnfläche Vorsprünge hat, die - bei entsprechender Positionierung - in die Vertiefungen 3a des Hülsenkopfs 2 des zugehörigen Niets eintreten können. Das Niethalteelement 28 ist gegen die Kraft einer Druckfeder 29 in das Gehäuse der Setzeinheit 11 zurückschiebbar.

Die Antriebswelle 26 nimmt in der anderen Drehrichtung des Motors 25 über eine Hülse 30 ein Nietbefestigungselement 31 drehend mit, das an seinem freien Ende einen Aufnahmespalt 32 hat, in den - bei entsprechender Positionierung - das Abreißelement 4 eines Niets eintreten kann. In den Aufnahmespalt 32 mündet ein durch das Nietbefestigungselement 31 führender Luftkanal 33 ein, der über einen seitlich aus dem Gerät 11 heraus führenden Anschluss 34 mit einer Vakuumquelle verbindbar ist, um den von den Elementen 28 und 31 ergriffenen Niet zu halten, so dass dieser zu der vorgesehenen Bohrung transportiert werden kann. Figur 7 zeigt ferner einige Lager 35 der Setzeinheit 11.

Die Setzeinheit 11 ist nicht nur gemeinsam mit der Versorgungseinheit 12 und der Zuführeinheit 11 mit einem Roboter einsetzbar, sondern kann auch als ein von Hand betätigtes Gerät verwendet werden. Es wird betont, dass die Erfindung nicht auf die beschriebene und dargestellte Ausführungsform beschränkt ist. Vielmehr können alle in der Beschreibung und Zeichnungen offenbarten Merkmale auf alle möglichen Arten einzeln kombiniert werden. Auch die in den Zeichnungen dargestellten Merkmale, die nicht gesondert beschrieben sind, werden - soweit sie neu sind - als zur Erfindung gehörig beansprucht.

Es wird betont, dass die Erfindung nicht auf die beschriebenen und dargestellten Ausführungsformen beschränkt ist. Vielmehr sind alle offenbarten Merkmale auf jede sinnvolle Weise einzeln miteinander kombinierbar.

## Patentansprüche

1. Vorrichtung zum Setzen von Nieten,
**gekennzeichnet durch**
einen Roboter (7) mit einem Roboterarm (8), an dem ein Setzgerät gehalten ist, das eine Versorgungseinheit (12), die mit einem Vorrat an Nieten verbunden ist, eine Zuführeinheit (10) für jeweils einen ausgewählten Niet und eine Setzeinheit (11) für den jeweiligen Niet aufweist.

2. Vorrichtung nach Anspruch 1,
**dadurch gekennzeichnet,**
**dass** die Versorgungseinheit (12) dauerhaft an dem Roboter (7) befestigt ist.

3. Vorrichtung nach einem der Ansprüche 1 oder 2,
**dadurch gekennzeichnet,**
**dass** die Zuführeinheit (10) und die Setzeinheit (11) zu einer Baugruppe verbunden sind, die schnell wechselbar an dem Roboter (7) gehalten ist.

4. Vorrichtung nach einem der Ansprüche 1 bis 3,
**dadurch gekennzeichnet,**
**dass** die Versorgungseinheit (12) mehrere Zuführschläuche (13) mit einem gemeinsamen Anschluss für einen Zuführschlauch (14) der Zuführeinheit (10) sowie eine Druckluftquelle aufweist.

5. Vorrichtung nach einem der Ansprüche 1 bis 4,
**dadurch gekennzeichnet,**
**dass** die Zuführeinheit (10) einen Sensor aufweist.

6. Vorrichtung nach einem der Ansprüche 1 bis 5,
**dadurch gekennzeichnet,**
**dass** am Ende des Zuführschlauches (14) eine Bremseinrichtung (18,19) angeordnet ist, die den Austritt der den Niet befördernden Druckluft versperren kann.

7. Vorrichtung nach Anspruch 6,
**dadurch gekennzeichnet,**
**dass** durch eine Druckluftleitung ein gegengerichteter Luftstrom in das Ende des Zuführschlauchs (14) eintreten kann.

8. Vorrichtung nach einem der Ansprüche 1 bis 7,
**dadurch gekennzeichnet,**
**dass** die Zuführeinheit (10) Greiferbacken (19) und Rückführgreiferbacken (20) für einen Niet aufweist, die mit einem Verfahrschlitten (21) verbunden sind.

9. Vorrichtung nach einem der Ansprüche 1 bis 8,
**dadurch gekennzeichnet,**
**dass** die Zuführeinrichtung (10) eine Abfallbox (15) aufweist mit einem Schlauch, durch den zurückgewiesene Nieten und die Abrissansätze (4) der gesetzten Nieten mit Druckluft geblasen werden.

10. Vorrichtung nach einem der Ansprüche 1 bis 9,
**dadurch gekennzeichnet,**
**dass** die Setzeinheit (11)
- einen Umkehrmotor (25) mit Drehmomentsensor,
- ein Nietbefestigungselement (31), das über einen in einer ersten Richtung offenen, in der zweiten Richtung gesperrten Freilauf mit dem Motor (25) in Antriebsverbindung steht,
- ein Niethalteelement (28) zum verdrehsicheren Halten eines Niets, das über einen in der ersten Richtung gesperrten, in der zweiten Richtung offenen Freilauf (27) mit dem Motor (25) in Verbindung steht,
- wobei die beiden Elemente (31,28) gegen Federkraft in die Setzeinheit zurückschiebbar ist und
- einen mit einer Vakuumquelle verbundenen Luftkanal (33) aufweist, der in einen Aufnahmespalt (32) des Nietbefestigungselementes (31) einmündet.
